# EUROPEAN PATENT SPECIFICATION

(11) **EP 2 344 787 B1**
(45) Date of publication and mention of the grant of the patent: **17.04.2013**
(21) Application number: 08805269.1
(22) Date of filing: 14.10.2008
(51) Int. Cl.: F16J 15/32, F16J 15/34, F16C 33/78

(54) **SEAL FOR ROLLING BEARING, IN PARTICULAR FOR ROLLING BEARING USED IN A WIND TURBINE**
DICHTUNG FÜR WÄLZLAGER, INSBESONDERE FÜR IN EINER WINDTURBINE VERWENDETE WÄLZLAGER
JOINT POUR ROULEMENT À BILLES, EN PARTICULIER POUR UN ROULEMENT À BILLES UTILISÉ DANS UNE ÉOLIENNE

(43) Date of publication of application: 20.07.2011
(73) Proprietor: Aktiebolaget SKF, 415 50 Göteborg (SE)
(72) Inventor: GRUBER, Andreas, A-8741 Maria Buch - Feistritz (AT); SWETE, Wolfgang, 8720 Knittelfeld (AT); OVIZE, Pascal, F-89530 Chitry-le-Fort (FR); TANKE, Jesko-Henning, 97422 Schweinfurt (DE); FICK, Ake, S-261 42 Landskrona (SE)
(74) Representative: Casalonga, Axel
(86) International application number: PCT/EP2008/063794
(87) International publication number: WO 2010/043249

(56) References cited:
- EP-A- 0 175 953
- DE-A1-102007 039 847
- FR-A- 1 178 954
- GB-A- 546 260
- JP-A- 2002 167 804
- US-A- 3 519 316

## Description

The present invention relates to the field of seals used in the rolling bearings, and more particularly in the rolling bearings operating in an aggressive outdoor environment due to the presence of various kinds of pollution, such as splashing water, dust and other foreign matter, to the exposition of the ultraviolet radiation emitted by the sun, and to the variations of temperature.

This is notably the case of the rolling bearings used in a wind turbine in order to angularly orient the rotor of said turbine according to the direction of the wind.

Otherwise, in the case of rolling bearings, and more specifically in the case of large-sized rolling bearings used for instance in such wind turbine, each time the bearing is lubricated, there is a high increase in the pressure inside the bearing. During this operation, said pressure may raise to 0,4 MPa. Thus, there is a risk that the surplus grease will be ejected from the bearing at the location of the seals. In the case of large-sized rolling bearings, pressure relief valves are provided to allow this surplus grease to be ejected. Nonetheless, the surplus grease does sometimes escape from the bearing via the seals rather than through these valves.

However, there are numerous applications in which an escape of grease through the bearing seals must be reliably avoided, both during the lubricating of the bearings, i.e. while the interior of the bearings is being pressurized, and during normal running of the bearings, even in the case of relative movements that the two rings may effect in addition to the rotational movements, under the action of the loads on the bearing. Such relative movements of the rings are relatively important more especially as the rolling bearing has a large diameter.

With the aim of avoiding this drawback, document FR-A-2 778 954 discloses a sealing arrangement for a rolling bearing comprising at least one row of rolling elements between first and second rings which are concentric and radially separated from one another by an annular space. This arrangement comprises at least an elastic seal fixed to the first ring and exhibiting a lip pressing against a bearing surface situated on the second ring inside the annular space. The lip of the seal is shaped in such a way that the force with which it presses against the bearing surface increases with the pressure inside the bearing.

With such a sealing arrangement, the lip opposes effectively any escape of grease, not only during lubrication but also during normal running of the bearing.

However, the sealing arrangement disclosed in this document has the drawback of being force fitted into a groove formed on the inner ring of the rolling bearing in order to obtain its retaining on said ring. This is detrimental in terms of mounting time and of cost.

One aim of the present invention is to overcome the aforementioned drawback.

It is a particular object of the present invention to provide a seal which is easy to install into a bearing, which prevents grease from escaping from the bearing, even under the effect of a raised pressure inside said bearing, and which also prevents the ingress of moisture, dust and other bodies into the bearing.

A further object to the present invention is to provide a seal having good wear and aging resistances.

Another object to the present invention is to provide a seal adapted to a large-sized rolling bearing, such as a bearing for a wind turbine.

The invention relates to a seal for a rolling bearing, in accordance with claim 1.

The seal for a rolling bearing provided with an inner ring, with an outer ring, and with at least one row of rolling elements between said outer and inner rings, comprises a static seal portion adapted to be fixed to one of the rings and a dynamic seal portion adapted to cooperate with the another ring. The static seal portion comprises an annular groove in which a complementary rib provided on the corresponding ring is intended to be housed to retain the seal on said ring.

The static seal portion comprises an axial portion adapted to be mounted into a groove of the ring, a radial portion extending said axial portion, and a tilted portion directed obliquely toward the axial portion and adapted to press against a retaining surface of the ring. Said portions define the annular groove.

The tilted portion may comprise an inner frustoconical flange adapted to press against the retaining surface. In one embodiment, the axial portion comprises tilted ribs adapted to be into contact with the groove in order to resist to an axial displacement of the seal.

In one embodiment, the dynamic seal portion comprises at least one lip joining the static seal portion and adapted to contact the corresponding ring.

Preferably, the dynamic seal portion comprises an axially external lip and an axially internal lip respectively directed obliquely towards the axially external side and the axially internal side of the rolling bearing. Advantageously, the axial gap between the internal lip and the external lip in a free state of the seal is smaller than the axial dimension of a rib provided on the ring and comprising frustoconical surfaces which said lips are intended to contact.

In one embodiment, the seal is formed from a thermoplastic urethane liner. The seal has advantageously hardness equal to or greater than 90 shore A.

The invention further relates to a rolling bearing in accordance with claim 8 and comprising an inner ring, an outer ring, at least one row of rolling elements and at least one seal provided between said outer and inner rings, the seal comprising a static seal portion fixed to one of the rings and a dynamic seal portion which cooperates with the other ring. The static seal portion comprises an annular groove in which a complementary rib provided on the corresponding ring is housed to retain the seal on said ring.

It is further proposed a manufacturing method of a seal for a rolling bearing in which the seal is manufactured in the form of a band and is then cut to the desired length, and in which the ends of the seal are heated in order to weld them, the seal being rolled on itself with the ends placed end-to-end to obtain an annular seal.

Illustrative and non-limiting embodiments of the present invention will be described below in detail with reference to the appended drawings, in which:
- Figure 1 is a half section of a rolling bearing comprising two seals according to a first embodiment of the invention,
- Figure 2 is a part section on a larger scale of the rolling bearing of Figure 1,
- Figure 3 is a part section of a rolling bearing according to a second embodiment of the invention, and
- Figures 4a to 4c represent the steps for manufacturing the seal shown on Figure 2 or/and Figure 3.

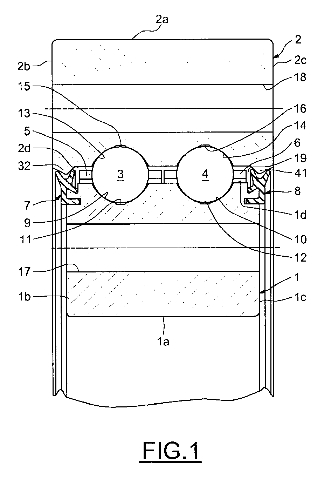

The rolling bearing as illustrated by Figure 1 is a large-diameter rolling bearing comprising an inner ring 1 and an outer ring 2 between which are housed two rows of rolling elements 3 and 4, which in this case are balls, two annular cages 5, 6 respectively maintaining the circumferential spacing of the rolling elements 3 and 4, and one or two annular seals 7 and 8.

The inner and outer rings 1, 2 are concentric and symmetric with respect to a transverse radial plane passing through the centre of the rolling bearing. The inner ring 1 is of the solid type. A "solid ring" is to be understood as a ring obtained by machining with removal of material (by machining, grinding) from tube stock, bar stock, rough forgings and/or rolled blanks.

The inner ring 1 has a bore 1a of cylindrical shape designed to be fixed to a chassis or to a structure of a machine (not shown) and delimited by opposite radial lateral surfaces 1b, 1c. The inner ring I also includes a stepped exterior cylindrical surface 1d onto which first and second toroidal circular races 9, 10 are formed. The races 9 and 10 are mutually symmetric with respect to the transverse radial plane passing through the centre of the rolling bearing. Each race 9, 10 is subdivided by an annular groove 11, 12 into two raceways having in cross section a concave internal profile adapted to the rolling elements 3, 4. The raceways of the races 9, 10 are directed outwards.

The outer ring 2, also of the solid type, includes an outer cylindrical surface 2a delimited by opposite radial lateral surfaces 2b, 2c. The outer ring 2 exhibits an axial length which is greater than the axial length of the inner ring 1. Thus, the outer ring 2 extends axially beyond the inner ring 1. The radial lateral surfaces 2b, 2c are axially set back from the corresponding radial surfaces 1b, 1c. The outer ring 2 also includes a stepped bore 2d of cylindrical shape into which first and second toroidal circular races 13, 14 are formed. The races 13, 14 are mutually symmetric with respect to the radial plane passing through the centre of the rolling bearing. Similarly to races 9 and 10, each race 13, 14 is subdivided by an annular groove 15, 16 into two raceways having in cross section a concave internal profile adapted to the rolling elements 3, 4. The raceways of the races 13, 14 are directed inwards. Each rolling element 3, 4 respectively arranged between the raceways of the races 9, 13 and 10, 14, while at the same time being kept circumferentially spaced apart by the cages 5 and 6, have four points of contact with the races of the rings 1, 2.

The rings 1, 2 comprise, in a way known per se, holes 17 and 18 for fixing the two rings to two parts of a machine, which can rotate one with respect to the other by virtue of the rolling bearing.

The two rings 1, 2 are separated radially from one another by an annular space 19 in which the cages 5 and 6 rotate. The seals 7, 8 are positioned radially partly inside the annular space 19. The seal 7 is mounted axially between the rolling elements 3 and the radial surface 2b of the ring 2. In other words, the seal 7 is axially offset relative to the radial surface 2b towards the interior of the rolling bearing.

The seal 8 is positioned axially between the rolling elements 4 and the radial surface 2c of the ring 2, remaining distant from said surface. The seal 8 is identical to the seal 7 and is positioned symmetrically with respect to the latter with regard to the radial plane passing through the centre of the rolling bearing. A closed space is defined between the rings 1, 2 and the seals 7, 8 in which the rolling members 3, 4 are housed so as to be protected against polluting elements.

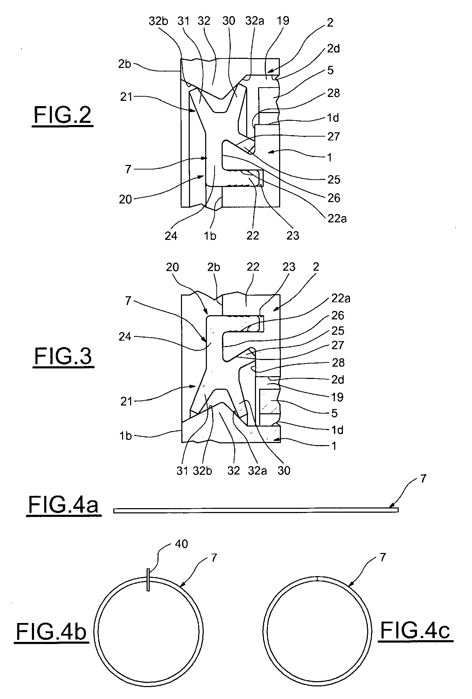

As shown more clearly on Figure 2, the seal 7 formed of an elastic material comprises a static seal portion 20 mounted on the inner ring I and a dynamic seal portion 21 which cooperates with the outer ring 2.

The static seal portion 20 is provided with an annular axial portion 22 mounted into an annular groove 23 provided on the radial surface 1b of the ring 1, with a radial portion 24 extending radially towards the outer ring 2 from the axial portion 22 and having an inner side which presses against the radial surface 1b, and with an annular tilted portion 25 extending from a large-diameter edge of the radial portion 24 towards the axial portion 22. The tilted portion 25 is directed obliquely inwards and forms a lip pressing against the ring 1. The portions 22, 24 and 25 form a heel or backbone having an annular groove 26 oriented axially towards the inner ring 1. The annular groove 26 has a trapezoidal cross section with an overall shape of a C.

Between the radial surface 1b and the exterior surface 1d, the inner ring 1 comprises a retaining surface 27 on which the tilted portion 25 presses and which is extended radially outwardly by a radial portion 28. The retaining surface 27 is formed on the inner ring 1 in the form of a frustoconical surface oriented in such a way that its downward extension is located towards the cage 5 and the rolling elements 3, i.e. on the internal side of the rolling bearing. In the illustrated example, the frustoconical bearing surface 27 makes an angle of approximately 45° with the axis of the rolling bearing. The inner flange of the tilted portion 25 comes into contact with the retaining surface 27, a free end of said tilted portion pressing against the radial portion 28.

The retaining surface 27 and the annular groove 23 define, on the radial surface 1b of the inner ring 1, an annular rib extending axially outwards and adapted to cooperate with the annular groove 26 of the seal 7 for mounting and retaining said seal on the inner ring 1. In other words, with its groove 26, the seal 7 is inserted for instance in a snap-in way by complementary shape on the axial rib provided on the radial surface 1b of the inner ring 1. Thus, the mounting of the seal 7 on the ring 1 can be easily achieved for example with a simple axial pushing movement without angular indexation. The static seal portion 20 of the seal 7 can be effectively secured on the inner ring 1 by virtue of the elasticity of said seal.

To achieve a good axial retaining effect of the seal 7 on the inner ring 1, the annular portion 22 may comprise a plurality of annular ribs 22a extending radially outwards. The ribs 22a are into contact with the groove 23 provided on the ring 1 and are tilted in order to prevent an axial displacement of the seal 7.

The dynamic seal portion 21 comprises an annular internal lip 30 and an external lip 31 both of which join or attach directly the heel of the static seal portion 20. The lips 30, 31 press against an annular rib 32 provided on the bore 2d of the outer ring 2. The rib 32 provided on the bore 2d is defined by frustoconical surfaces 32a, 32b. The frustoconical surface 32a is oriented in such a way that its downward extension is directed toward the inner ring I and is located axially towards the external side of the rolling bearing. By considering the frustoconical surface 32a, the surface 32b has a slope in an opposite direction and is extended radially from the radial surface 2b.

The dynamic seal portion 21 of seal 7 is radially disposed into the space 19 defined between the inner and outer rings 1, 2. The lips 30, 31 have, in cross section, the overall shape of a V which is oriented towards the outer ring 2. Said lips respectively cooperate with the frustoconical surfaces 32a, 32b to create a dynamic tightness with the outer ring 2. More precisely, only the axially external free end of the internal lip 30 and only the axially internal free end of the external lip 31 press against frustoconical surfaces 32a, 32b. The internal lip 30 is directed obliquely inwards, the external lip 31 being directed obliquely outwards.

In order to keep in a permanent contact state the lips 30, 31 with the protrusion or rib 32, the axial dimension of said rib 32 is larger than the axial gap between the free ends of lips 30, 31 in a free state of the seal 7. Thus, by the elasticity of the seal 7 in axial direction, the lips 30, 31 are kept in permanent contact with the surfaces 32a, 32b.

Furthermore, in any condition during assembly or operation, the edge of the annular rib 32 always remains radially away from the bottom of the V shape formed by the lips 30 and 31. That is to say that a radial gap is always present between the edge of the rib 32 and the bottom of the V. Thanks to this, in case the seal 7 is accidentally pressed too much towards the inside of the bearing for instance during assembly, the bottom of the V won't contact the edge of the rib 32, which would create abnormal excess of friction torque.

The internal lip 30 is axially directed towards the cage 5 and the rolling element 3, i.e. on the internal side of the rolling bearing. The lip 30 is contacting the frustoconical surface 32a of the rib 32 thus preventing any escape of grease from the inside of the bearing to the outside. By virtue of the frustoconical surface 32a and its cooperation with the lip 30 directed obliquely inwards, any increase in pressure inside the bearing leads to an increase of the pressing force of the lip 30 against the surface 32a without the risk of said lip being expelled under the effect of the raised pressures likely to occur, for example, when lubricating the bearing through greasing holes (not shown). In this case, there may be an oblique planar contact between the lip 30 and the surface 32a.

Besides, by virtue of the frustoconical retaining surface 27 and of the orientation of the tilted portion 25, any increase in pressure inside the bearing leads to an increase of the pressing force of the portion 25 against the surface 27. Thus, the sealing and retaining effects of the tilted portion 25 on the retaining surface 27 are increased. When the pressure inside the bearing is higher, the sealing effects of the lips 25, 30 and the retaining effects of the lip 25 are increased. Thus, the seal 7 is coupled with the inner ring I in a secure way.

The external lip 31, axially located towards the external side of the rolling bearing, which is contacting the surface 32b of the rib 32 prevents foreign matter from entering the interior of the bearing, such as moisture, dust or muddy water. Any increase in pressure outside the bearing leads to an increase of the pressing force of the lip 31 against the surface 32b. The internal lip 30 supplements the action of the external lip 31 and vice-versa, and improves protection against the ingress of moisture and other foreign bodies into the bearing from the outside.

The internal and external lips 30, 31 also maintain their functions in the event of relative movements of the two rings 1, 2 under the action of loads (axial, radial, tipping moments) to which the bearing may be subjected during running, without the seal 7 losing its sealing function.

Advantageously, the seal 7 is integrally formed from thermoplastic urethane liner (TPU) offering a good resistance to low and high temperatures, to wear, to ozone, to ultraviolet radiation, and being an excellent fungal inhibitor. Besides, with such a material, the seal 7 can easily be manufactured by extrusion at the desired shape in cross section in the form of a band as shown on Figure 4a, and after cutting to the desired length, and then wound on itself as depicted on Figure 4b. To obtain the seal 7, a heating plate 40 is used to heat the ends of the band in order to weld them end to end (Figure 4c). With such a welding, the mechanical properties of the seal outperform those obtained with a seal wounding on itself and connected end to end by glue. Besides, with the use of a thermoplastic urethane liner, the seal 7 is flexible enough to allow an easy installation into the bearing but has also enough stiffness for its axial retaining on the protrusion of the inner ring which is delimited by the groove 26 and the retaining surface 27.

Preferably, the seal material has a shore A hardness equal to or greater than 90, for a good compromise between stiffness and sealing effect.

As above-mentioned, the sealing of the retaining on the other side is provided by the seal 8 which is identical to the seal 7 and which cooperates with annular rib 41 of the outer ring 2. The ribs 32, 41 are mutually symmetric with respect to the transverse radial plane passing through the centre of the rolling bearing. In the embodiment depicted, the ribs 32, 41 are integrally formed with the outer ring 2. Alternatively, said ribs may be separate bodies.

On the embodiment illustrated in Figure 3, in which identical parts are given identical references, the rings 1, 2 and the seal 7 are similar but reversed with respect to the embodiment shown of Figures 1 and 2. The static seal portion 20 of the seal 7 is fixed to the outer ring 2 and the dynamic seal portion 21 cooperates with a rib 32 provided on the inner ring 1. Here, the inner ring 1 exhibits an axial length which is greater than the axial length of the outer ring 2.

It should be noted that the embodiments illustrated and described were given merely by way of non-limiting indicative examples and that modifications and variations are possible within the scope of the invention as defined by the appended claims. Thus, the invention applies not only to double rows of balls with four-point contact but also to other types of rolling bearing, for example, bearings with a single row of balls, or with at least three rows of balls. It is easily understood that it could also be possible to use bearing with other types of rolling members such as rollers. The disclosed rolling bearings are particularly useful as bearing for wind turbines which are submitted to high internal pressures and exposed to UV light and rain water.

## Claims

1. Seal (7) for a rolling bearing comprising an inner ring (1), an outer ring (2), and at least one row of rolling elements (3) between said outer and inner rings, the seal (7) comprising a static seal portion (20) adapted to be fixed to one of the rings (1, 2) and and a dynamic seal portion (21) adapted to cooperate with the another ring (2, 1), **characterized in that** the static seal portion (20) comprises an axial portion (22) adapted to be mounted into a groove (23) provided on a radial surface (1b) of the corresponding ring (1,2), a radial portion (24) extending said axial portion, and a tilted portion (25) extending said radial portion, directed obliquely towards the axial portion (22) and adapted to press against a retaining surface (27) of the corresponding ring (1, 2), said axial, radial and tilted portions (22, 24, 25) defining an annular groove (26) oriented axially towards the corresponding ring (1, 2) and in which a complementary rib provided on said corresponding ring (1, 2) is intended to be housed to retain the seal on said ring.

2. Seal according to claim 1, wherein the tilted portion (25) comprises an inner frustoconical flange adapted to press against the retaining surface (27).

3. Seal according to claim 1 or 2, wherein the axial portion (22) comprises tilted ribs (22a) adapted to contact the groove (23) in order to resist to an axial displacement of the seal.

4. Seal according to any of the preceding claims, wherein the dynamic seal portion (21) comprises at least one lip (30, 31) joining the static seal portion (20) and adapted to contact the corresponding ring (2).

5. Seal according to claim 4, wherein the dynamic seal portion (21) comprises an axially external lip (31) and an axially internal lip (30) respectively directed obliquely towards the axially external side and the axially internal side of the rolling bearing.

6. Seal according to any of the preceding claims, formed from thermoplastic urethane liner.

7. Seal according to any of the preceding claims, having hardness equal to or greater than 90 shore A.

8. Rolling bearing comprising an inner ring (1), an outer ring (2), at least one row of rolling elements (3) and at least one seal (7) according to any of the preceding claims.

## Patentansprüche

1. Dichtung (7) für ein Wälzlager mit einem Innenring (1), einem Außenring (2) und mindestens einer Reihe von Wälzkörpern (3) zwischen dem Außenring und dem Innenring, wobei die Dichtung (7) einen statischen Dichtungteil (20), der zum Anbringen an einem der Ringe (1, 2) ausgeführt ist, und einen dynamischen Dichtungsteil (21), der zum Zusammenwirken mit dem anderen Ring (2, 1) ausgeführt ist, umfasst, **dadurch gekennzeichnet, dass** der statische Dichtungsteil (20) einen axialen Teil (22), der zur Befestigung in einer Nut (23) ausgeführt ist, die auf einer radialen Fläche (1b) des entsprechenden Rings (1, 2) vorgesehen ist, einen radialen Teil (24), der den axialen Teil verlängert, und einen geneigten Teil (25), der den radialen Teil verlängert und schräg zum axialen Teil (22) gerichtet und dazu ausgeführt ist, gegen eine Haltefläche (27) des entsprechenden Rings (1, 2) zu drücken, umfasst, wobei der axiale, der radiale und der geneigte Teil (22, 24, 25) eine Ringnut (26) definieren, die zu dem entsprechenden Ring (1, 2) axial ausgerichtet ist und in der eine an dem entsprechenden Ring (1, 2) vorgesehene komplementäre Rippe zum Festhalten der Dichtung an dem Ring aufgenommen werden soll.

2. Dichtung nach Anspruch 1, wobei der geneigte Teil (25) einen kegelstumpfförmigen inneren Flansch umfasst, der zum Drücken gegen die Haltefläche (27) ausgeführt ist.

3. Dichtung nach Anspruch 1 oder 2, wobei der axiale Teil (22) geneigte Rippen (22a) umfasst, die dazu ausgeführt sind, die Nut (23) zu berühren, um einer axialen Verschiebung der Dichtung entgegenzuwirken.

4. Dichtung nach einem der vorhergehenden Ansprüche, wobei der dynamische Dichtungsteil (21) mindestens eine Lippe (30, 31) umfasst, die mit dem statischen Dichtungsteil (20) verbunden und dazu ausgeführt ist, den entsprechenden Ring (2) zu berühren.

5. Dichtung nach Anspruch 4, wobei der dynamische Dichtungsteil (21) eine axial äußere Lippe (31) und eine axial innere Lippe (30) umfasst, die schräg zur axial äußeren Seite bzw. axial inneren Seite des Wälzlagers gerichtet sind.

6. Dichtung nach einem der vorhergehenden Ansprüche, die aus thermoplastischem Polyurethan gebildet ist.

7. Dichtung nach einem der vorhergehenden Ansprüche, die eine Shore-A-Härte größer gleich 90 aufweist.

8. Wälzlager, das einen Innenring (1), einen Außenring (2), mindestens eine Reihe von Wälzkörpern (3) und mindestens eine Dichtung (7) nach einem der vorhergehenden Ansprüche umfasst.

## Revendications

1. Joint (7) pour un roulement comprenant une bague intérieure (1), une bague extérieure (2), et au moins une rangée d'éléments de roulement (3) entre lesdites bagues extérieure et intérieure, le joint (7) comprenant une portion de joint statique (20) prévue pour être fixée à l'une des bagues (1, 2) et une portion de joint dynamique (21) prévue pour coopérer avec l'autre bague (2, 1), **caractérisé en ce que** la portion de joint statique (20) comprend une portion axiale (22) prévue pour être montée dans une gorge (23) prévue sur une surface radiale (1b) de la bague correspondante (1, 2), une portion radiale (24) prolongeant ladite portion axiale, et une portion inclinée (25) prolongeant ladite portion radiale, orientée obliquement vers la portion axiale (22) et adaptée pour presser contre une surface de retenue (27) de la bague correspondante (1, 2), lesdites portions axiale, radiale et inclinée (22, 24, 25) définissant une gorge annulaire (26) orientée axialement vers la bague correspondante (1, 2) et dans laquelle une nervure complémentaire prévue sur ladite bague correspondante (1, 2) est destinée à être logée de manière à retenir le joint sur ladite bague.

2. Joint selon la revendication 1, dans lequel la portion inclinée (25) comprend une bride tronconique intérieure adaptée pour presser contre la surface de retenue (27).

3. Joint selon la revendication 1 ou 2, dans lequel la portion axiale (22) comprend des nervures inclinées (22a) adaptées pour venir en contact avec la gorge (23) afin de résister à un déplacement axial du joint.

4. Joint selon l'une quelconque des revendications précédentes, dans lequel la portion de joint dynamique (21) comprend au moins une lèvre (30, 31) joignant la portion de joint statique (20) et adaptée pour venir en contact avec la bague correspondante (2).

5. Joint selon la revendication 4, dans lequel la portion de joint dynamique (21) comprend une lèvre axialement externe (31) et une lèvre axialement interne (30) respectivement orientées obliquement vers le côté axialement externe et le côté axialement interne du roulement.

6. Joint selon l'une quelconque des revendications précédentes, formée à partir d'un polyuréthane thermoplastique.

7. Joint selon l'une quelconque des revendications précédentes, ayant une dureté supérieure ou égale à 90 shore A.

8. Roulement comprenant une bague intérieure (1), une bague extérieure (2), au moins une rangée d'éléments de roulement (3) et au moins un joint (7) selon l'une quelconque des revendications précédentes.
